# EUROPÄISCHE PATENTSCHRIFT

(11) **EP 1 792 761 B1**
(45) Veröffentlichungstag und Bekanntmachung des Hinweises auf die Patenterteilung: **05.01.2011**
(21) Anmeldenummer: 06022388.0
(22) Anmeldetag: 26.10.2006
(51) Int. Cl.: B60H 1/00

(54) **Klappenanordnung**
Flap assembly
Installation des volets

(30) Priorität: 30.11.2005 DE 102005057392
(43) Veröffentlichungstag der Anmeldung: 06.06.2007
(60) Teilanmeldung: 10183613.8
(73) Patentinhaber: Behr GmbH & Co. KG, 70469 Stuttgart (DE)
(72) Erfinder: Dieksander, Wolfgang, 71711 Steinheim/Murr (DE); Hörig, Harald, 76476 Bischweier (DE)

(56) Entgegenhaltungen:
- DE-A1- 4 442 000
- DE-A1- 19 632 147
- DE-C1- 19 639 321
- GB-A- 2 349 691

## Beschreibung

Die Erfindung betrifft eine Klappenanordnung einer Heizungs- oder Klimaanlage für ein Kraftfahrzeug gemäß dem Oberbegriff des Anspruchs 1, eine Solche ist aus DE 196 39 321 C1 bekannt.

Aus der EP 0 893 292 A2 ist eine Heizungs- oder Klimaanlage für ein Kraftfahrzeug bekannt, mit einem Heizkörper, wenigstens zwei jeweils seitlich an dem Heizkörper vorbei geführter Kaltluftkanäle, einzelnen in Strömungsrichtung anschließend an den Heizkörper vorgesehenen Mischräumen, in denen Luft durch Luftstromsteuerungselemente jeweils auf eine bestimmte Temperatur mischbar ist und von dort über Luftkanäle einer zugeordneten Klimatisierungszone zuführbar ist. Dabei sind, um einen geringen Bauraum und dennoch eine optimale Vermischung der Kalt- und Warmluft zu ermöglichen, jedem Mischraum wenigstens zwei der Luftstromsteuerelemente zugeordnet, von denen eines als Kaltluftklappe in dem Kaltluftkanal angeordnet ist und ein zweites als unmittelbar an einer Austrittsseite des Heizkörpers angeordnetes Warmluftsteuerelement ausgebildet ist. Das Warmluftsteuerelement weist hierbei mehrere an sich bekannte, jalousieartig angeordnete Lamellen auf, die in ihrer Schließstellung einen dem jeweiligen Mischraum zugeordneten Teilbereich der Austrittsseite des Heizkörpers abdecken. Eine derartige Klappenanordnung lässt jedoch noch Wünsche offen.

Es ist Aufgabe der Erfindung, eine verbesserte Klappenanordnung zur Verfügung zu stellen.

Diese Aufgabe wird gelöst durch eine Klappenanordnung mit den Merkmalen des Anspruchs 1. Vorteilhafte Ausgestaltungen sind Gegenstand der Unteransprüche.

Erfindungsgemäß ist eine Klappenanordnung, insbesondere für eine Kraftfahrzeug-Heizungs- oder Klimaanlage, vorgesehen, mit mindestens einem Wärmetauscher, insbesondere bevorzugt ein Heizkörper und/oder ein Zuheizer, und mindestens einem mindestens einen Luftstrom regelnden Modul, welches mindestens eine Klappe aufweist und hinter dem Wärmetauscher angeordnet ist, wobei die Klappenanordnung mindestens ein zweites, weiteres Modul mit Klappen aufweist, das vor dem Wärmetauscher angeordnet ist. Hierbei verhindert das Modul vor dem Wärmetauscher ein Einströmen und wieder Rückströmen von Luft in den Wärmetauscher. Ferner hat das Modul vor dem Wärmetauscher eine Luftleitfunktion, d.h. im geschlossenen Zustand der Klappen wird die Luft zu einem anderen Kanal, vorzugsweise zu einem Kaltluftkanal, geleitet. Das Modul hinter dem Wärmetauscher verhindert im geschlossenen Zustand der Klappen ein Ausströmen erwärmter Luft. Ansonsten bietet es bei entsprechender Ausgestaltung die gleichen Vorteile, wie die in der EP 0 893 292 A2 beschriebenen Luftsteuerelemente. Eine derartige Klappenanordnung benötigt wenig Bauraum, es ist also eine sehr kompakte Bauweise möglich.

Die Module sind vorzugsweise zumindest im Wesentlichen, d.h. insbesondere abgesehen von zusätzlichen Dichtelementen, die ggf. an nur einem der Module vorgesehen sind, vorzugsweise nur am in Luftströmungsrichtung hinteren Modul, und insbesondere bauraumbedingten, speziellen Ausgestaltungen in Zusammenhang mit der Kinematik, als Gleichteile ausgebildet sind. Bevorzugt sind die Module zumindest im Wesentlichen spiegelbildlich bezüglich der Mittellängsebene des Kraftfahrzeugs, d.h. fahrer- und beifahrerseitig gleich ausgebildet, wobei ggf. vorgesehene Unterschiede insbesondere bedingt sein können durch eine einseitige Abringung von Aktuatoren und der damit in Zusammenhang stehenden, entsprechend angepassten Kinematik. Bei entsprechender Ausgestaltung können auch bevorzugt für die Fahrer- und Beifahrerseite die gleichen Klappen verwendet werden.

Erfindungsgemäß weist das in Luftströmungsrichtung vor dem Wärmetauscher angeordnete Modul mindestens zwei, vorzugsweise mindestens sechs getrennt ausgebildete Klappen und/oder dass das in Luftströmungsrichtung hinter dem Wärmetauscher angeordnete Modul mindestens zwei, vorzugsweise mindestens sechs getrennt ausgebildete Klappen auf, wobei die Klappen bevorzugt je hälftig der Fahrerseite und der Beifahrerseite zugeordnet sind. Die Mindestanzahl der Klappen entspricht der Zonenzahl, jedoch sind bevorzugt für die dem Fahrer und Beifahrer zugeordneten Zonen jeweils mehrere, insbesondere bevorzugt drei Klappen vorgesehen. Zur Verringerung der Zonenzahl können auch die den einzelnen in Folge der Zonenzahlverringerung zusammenfallenden Zonen gekoppelt werden. Dies betrifft insbesondere die dem Fondbereich zugeordneten Klappen (vierzonige Klimaanlage wird in eine dreizonige Klimaanlage umgewandelt), aber auch die dem Front- und Fondbereich zugeordneten Klappen auf Fahrer- und Beifahrerseite (vierzonige Klimaanlage wird in eine zweizonige Klimaanlage umgewandelt).

Erfindungsgemäß sind die Schwenkachsen mindestens zweier Klappen, insbesondere bevorzugt der dem Front- und Fondbereich zugeordneten, nicht parallel zueinander angeordnet. Dabei sind bevorzugt die dem Fondbereich zugeordneten Klappen zwischen den dem Frontbereich zugeordneten Klappen, in der Nähe der Mittellängsebene des Fahrzeugs angeordnet, wobei dass eine horizontale Anordnung der dem Frontbereich zugeordneten, äußeren Klappen und eine vertikale Anordnung der dem Fondbereich zugeordneten, inneren Klappen sehr vorteilhaft in Hinblick auf die Betätigung und die Anbringung der Aktuatoren am Luftführungsgehäuse ist.

Bevorzugt unterscheiden sich die Module einer zweizonigen Klimaanlage sich von den Modulen einer drei- oder vierzonigen Klimaanlage dadurch, dass bei den Modulen der zweizonigen Klimaanlage Trennwände durchgehend ausgebildet sind, die zumindest bereichsweise bei den Modulen der drei- oder vierzonigen Klimaanlage durch Klappen ersetzt sind.

Teil der Klappenanordnung ist vorzugsweise ein weiteres Modul mit mindestens einer Klappe, welches in einem Kaltluftkanal eines Luftführungsgehäuse anordenbar ist und welches den zweiten Strömungsweg der Luft regelt. Das weitere Modul kann mehrere Klappen aufweisen, insbesondere bevorzugt in einer mindestens der Zonenzahl entsprechenden Anzahl, wobei jedoch Koppelungen einzelner Klappen möglich sind.

Bevorzugt ist zumindest ein Teil der Klappen der Klappenanordnung durch lamellenartige, um eine mittig verlaufende Schwenkachse drehbare Klappen gebildet. Hierbei sind bevorzugt die Schwenkachsen der Klappen eines Moduls, die einer Zone zugeordnet sind, parallel verlaufend angeordnet.

Die Module einschließlich der Klappen können kostengünstig als Kunststoff-Spritzgussteile, wobei sie ggf. auch aus mehreren Komponenten bestehen können, hergestellt werden, jedoch können auch andere Materialien verwendet werden.

Die Module sind vorzugsweise in einem Luftführungsgehäuse der Heiz- und Klimaanlage positioniert und werden von demselben gehalten und zumindest bereichsweise fixiert. Dabei können im Luftführungsgehäuse Führungsnuten oder führende Vorsprünge für eine besonders einfache Montage vorgesehen sein.

Bei entsprechender Ausgestaltung des Luftführungsgehäuses kann die Funktion der Rahmen der Module direkt vom Luftführungsgehäuse übernommen werden, so dass die Module nur noch aus den entsprechenden Klappen und deren Stellvorrichtungen bestehen.

Im Folgenden wird die Erfindung anhand zweier Ausführungsbeispiel mit Varianten, teilweise unter Bezugnahme auf die Zeichnung, im Einzelnen erläutert. In der Zeichnung zeigen:
- Fig. 1: einen Schnitt durch einen Teil eine nicht erfindungsgemäßen zweizonigen Kraftfahr- zeug-Klimaanlage,

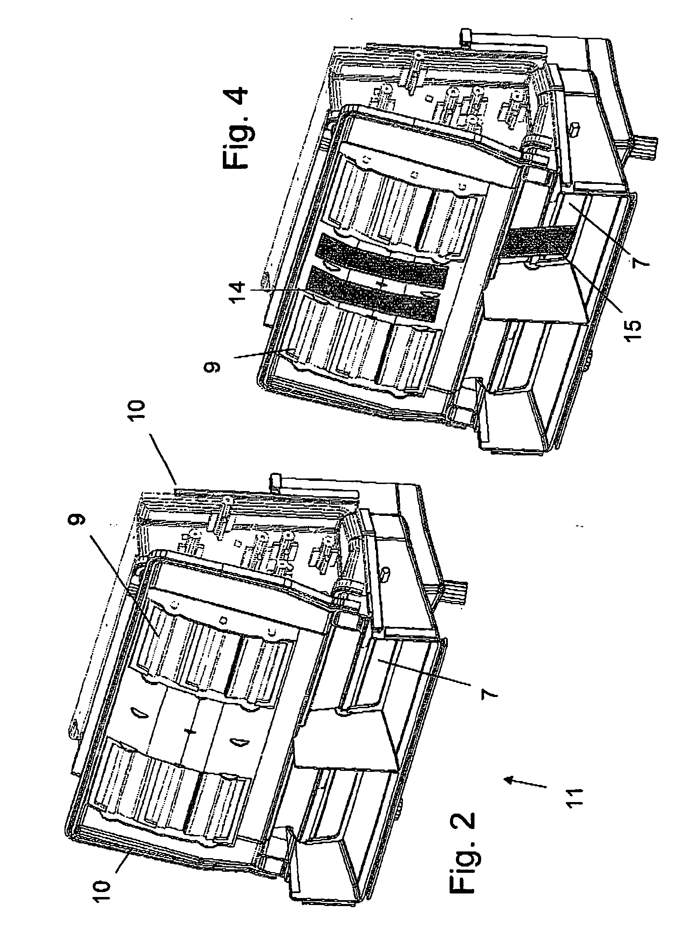

- Fig. 2: eine perspektivische Ansicht der Klappenanordnung von Fig. 1 mit Klappenträger und Luftführungsgehäuseunterteil,

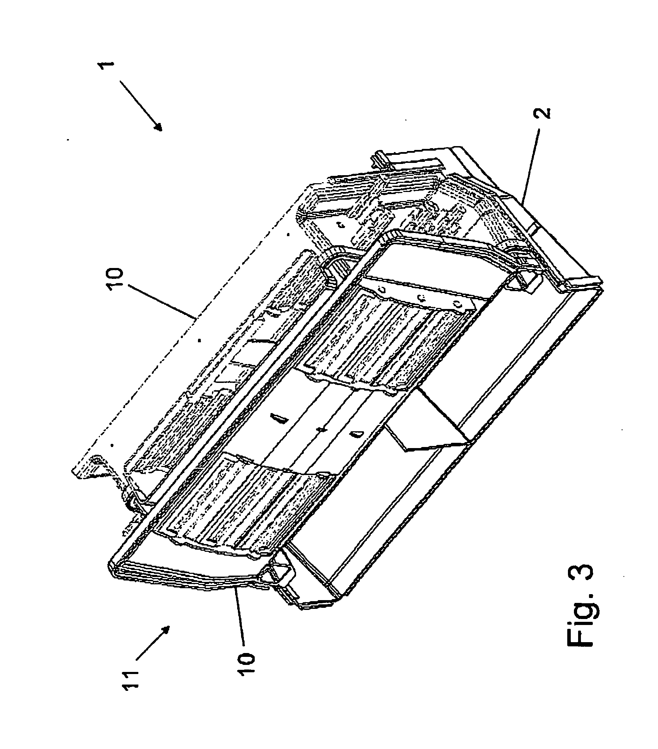

- Fig. 3: eine andere perspektivische Ansicht der Klappenanordnung von Fig. 1,
- Fig. 4: eine Fig. 3 entsprechende Ansicht einer Klappenanordnung für eine erfindungsgemäße vierzonige Kraftfahrzeug-Klimaanlage,
- Fig. 5a und 5b: eine vergleichende Darstellung einer Vorderansicht der Klappenanordnungen von Fig. 1 und Fig. 4,
- Fig. 6a und 6b: eine vergleichende Darstellung der Rückansichten der Klappenanordnungen von Fig. 1 und Fig. 4, und
- Fig. 7a und 7b: eine vergleichende Darstellung von Kaltklappen, wie sie bei der zweizonigen Klimaanlage von Fig. 1 und der vierzo- nigen Klimaanlage von Fig. 4 verwendet werden.

Eine zweizonige Kraftfahrzeug-Klimaanlage 1 weist - in einem mehrteiligen, im Wesentlichen aus spritzgegossenen Kunststoffteilen gebildeten Luftführungsgehäuse 2 angeordnet - ein Gebläse (nicht dargestellt), welches Luft aus der Umgebung oder/oder aus dem Fahrzeuginnenraum ansaugt, einen Verdampfer 3 und einen Heizkörper 4 auf. Hierbei kann - von nachfolgend näher beschriebenen Klappen für jede Zone unabhängig voneinander geregelt - die vom Gebläse angesaugte Luft durch den Verdampfer 3 und anschließend am Heizkörper 4 über einen Kaltluftkanal 5, der vorliegend unterhalb des Heizkörpers 4 verlaufend angeordnet ist, vorbei oder durch den Heizkörper 4 hindurch strömen.

Die Klimaanlage ist im Wesentlichen spiegelbildlich bezüglich ihrer Mittellängsebene ausgebildet, wobei je eine Seite einer Zone zugeordnet ist und die beiden Zonen durch eine in der Mittellängsebene verlaufende Trennwand voneinander getrennt sind. Im Folgenden wird daher der Einfachheit halber nur auf eine Seite näher eingegangen.

Im Falle einer Aufteilung des Luftstroms werden die beiden Luftströme, d.h. der warme Teilluftstrom und der kalte Teilluftstrom, in einem dem Heizkörper 4 bzw. dem Kaltluftkanal 5 nachfolgenden Mischraum 6 gemischt und über verschiedene Klappen (wie Defrost-Klappen, Fußraumklappen, Belüftungsklappen - nicht dargestellt) auf verschiedene Luftkanäle verteilt und dem Fahrzeuginnenraum zugeführt.

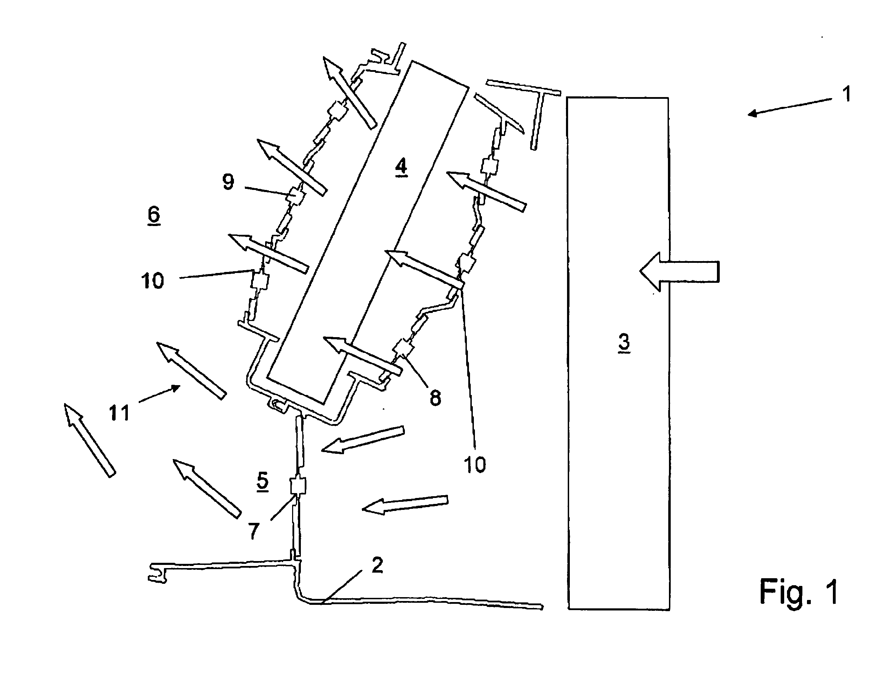

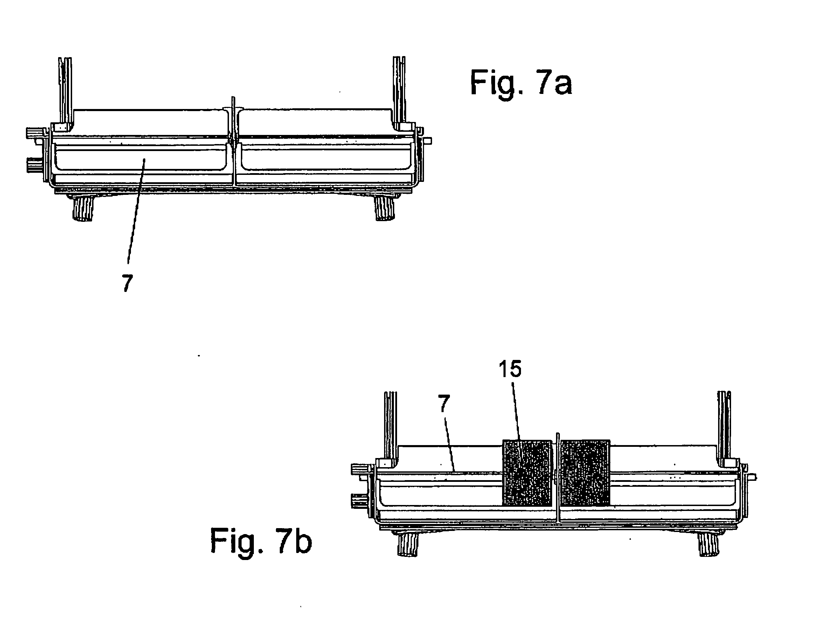

Im Kaltluftkanal 5 ist eine Kaltluftklappe 7 angeordnet, wie sie in Fig. 7a im Detail dargestellt ist. Die Kaftluftklappe 7 ist um eine zentrale Achse verschwenkbar, die vorliegend senkrecht zur Mittellängsebene angeordnet ist, d.h. senkrecht zur Bildebene von Fig. 1 verläuft.

Vor dem Heizkörper 4 sind drei Primärklappen 8 und hinter dem Heizkörper 4 sind entsprechend drei Sekundärklappen 9 mit jeweils waagerecht und parallel zueinander verlaufenden Schwenkachsen angeordnet. Die einzelnen Klappen 8 und 9 sind als Gleichteile ausgebildet. Die Primärklappen 8 dienen einem Abschirmen des Heizkörpers 4 zur Vermeidung einer im Kühletrieb unerwünschten Erwärmung des Luftstroms, der anschließend durch den Kaltluftkanal 5 strömt, und die Sekundärklappen 9 dienen einem Verhindern des Ausströmens von warmer, vom Heizkörper 4 kommender Luft, weshalb die Anschlagflächen der Sekundärklappen 9 zusätzlich mit Dichtelementen (nicht dargestellt) versehen sind, welche eine Abdichtung ermöglichen, während die Anschlagflächen der Primärklappen 8 ohne Dichtelemente ausgebildet sind, also vorliegend nicht vollständig abdichtend ausgebildet sind.

Gemäß einer Variante sind auch die Anschlagflächen der Primärklappen mit Dichtelementen versehen, welche auch eine Abdichtung im vorderen Bereich ermöglichen und zusätzlich Anschlaggeräusche der Primärklappen 8 vermeiden oder zumindest vermindern.

Gemäß einer weiteren Variante sind keine Dichtelemente vorgesehen, sondem die Dichtfunktion der Klappen 8 und 9 per se reicht aus, um eine den Komfort beeinträchtigte Nebenströmung durch den Heizkörper zu verhindern oder in einem Rahmen zu halten, der keine wesentlichen Auswirkungen auf den Komfort hat.

Die einzelnen Klappen 8 und 9 sind in jeweils einem Modul 10 angeordnet, welches im Wesentlichen durch die entsprechenden Klappen 8 bzw. 9 und einen Rahmen, der die Klappen schwenkbar hält und im Luftführungsgehäuse 2 anbringbar ist, gebildet wird, wobei die Module 10 vorliegend im Wesentlichen (d.h. abgesehen von den Dichtelementen der Anschlagflächen der Sekundärklappen 9) als Gleichteile ausgebildet sind und zusammen eine Klappenanordnung 11 bilden, die beidseitig des Heizkörpers 4 angeordnet ist. Der Rahmen weist ferner Teile von Trennwänden auf, welche zur Unterteilung der einzelnen Zonen dienen. Der Rahmen selbst ist in eine entsprechend im Luftführungsgehäuse 2 ausgebildete Führung eingeschoben und wird durch Schließen des Luftführungsgehäuses 2 am Ende der Vormontage der Klimaanlage 1 fest im Luftführungsgehäuse 2 eingeschlossen.

Die Klappen sind vorliegend derart ausgebildet, unterstützt durch die horizontale Anordnung der Schwenkachsen, dass zumindest für die entsprechenden kurzen Wege des Frontbereichs keine vollständige Vermischung der Kalt- und Warmluftströme erfolgt, sondern eine gewisse Temperaturschichtung beibehalten wird, welche von den Fahrzeuginsassen als angenehm empfunden wird.

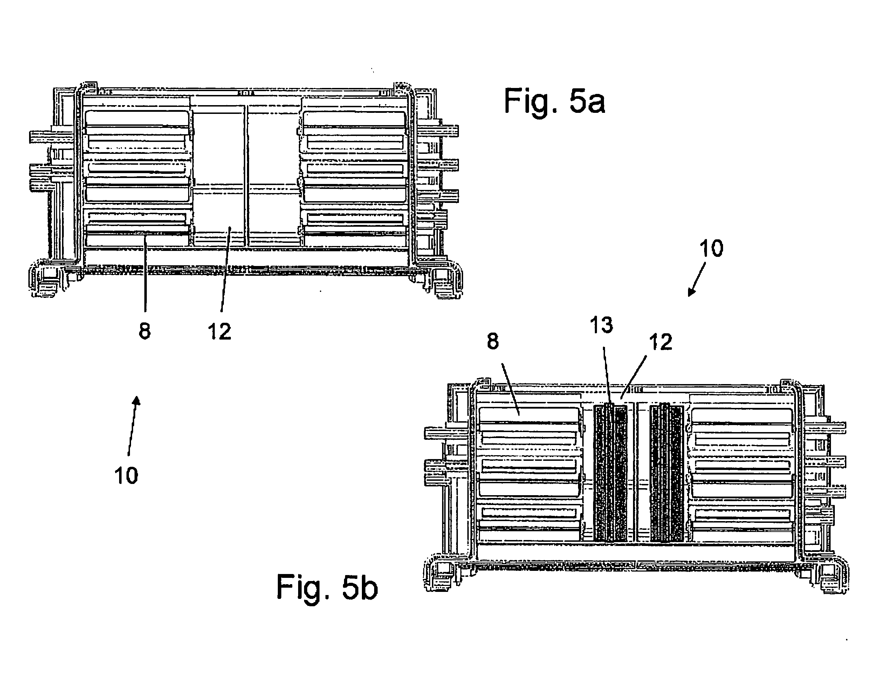

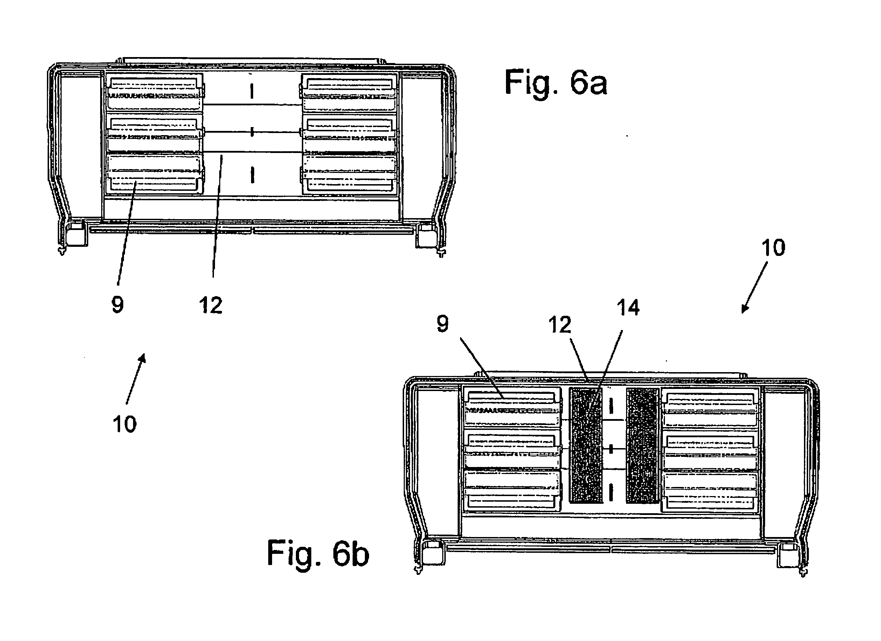

Bei der zweizonigen Kraftfahrzeug-Klimaanlage 1, wie sie in der Zeichnung dargestellt ist, ist im Bereich der Mittellängsebene der Module 10 eine Trennwand 12 vorgesehen, die im Falle einer vierzonigen Ausgestaltung, wie sie im Folgenden - soweit sie sich von der zuvor beschrienen Klimaanlage unterscheidet - beschrieben wird, im Wesentlichen entfällt (siehe Fig. 5b und 6b) und in den entsprechenden Bereichen durch Klappen 13 und 14 setzt ist. Die Klappen 13 und 14 weisen vorliegend senkrecht zu den Schwenkachsen der Klappen 8 und 9 und im Wesentlichen vertikal verlaufende Schwenkachsen auf. In Folge der unterschiedlich ausgerichteten Schwenkachsen lassen sich die für die Klappenstellbewegungen erforderlichen Aktuatoren samt deren Kinematik einfacher am Luftführungsgehäuse 2 anbringen, wodurch eine Verringerung des Bauraumbedarfs möglich ist.

Eine entsprechende Ausgestaltung von Klappen und deren Schwenkachsen ist vorliegend auch für die Kaltluftklappen 7 vorgesehen (siehe Fig. 7b), wobei auch in diesem Fall die dem Fondbereich zugeordneten Klappen 15 näher der Mittellängsebene des Kraftfahrzeugs angeordnet sind als die dem Frontbereich zugeordneten Klappen 7.

Um aus einer vierzonigen Klimaanlage eine zweizonige Klimaanlage zu machen, können natürlich auch die dem Front- und Fondbereich zugeordneten Klappen 8 und 13 (Primärklappen), 9 und 14 (Sekundärklappe) sowie 7 und 15 (Kaltluftklappen) jeweils miteinander gekoppelt sein. Hierbei entfällt die eigenständige Regelung für den Fondbereich, so dass sich die Regelung vereinfacht. In Folge größerer Stückzahlen kann eine entsprechende Ausgestaltung Vorteile gegenüber einer speziellen Variante für eine zweizonige Klimaanlage bieten.

Gemäß einer nicht in der Zeichnung dargestellten Variante ist direkt benachbart dem Heizkörper, also zwischen den beiden Modulen der Klappenanordnung, ein elektrisch betreibbarer Zuheizer angeordnet.

An Stelle der zuvor beschriebenen, lamellenartigen Klappen mit zentraler Schwenkachse können auch andere Schwenkklappen insbesondere bevorzugt jalousieartige Klappen, vorgesehen sein.

## Patentansprüche

1. Klappenanordnung, insbesondere für eine Heizungs- oder Klimaanlage (1) für ein Kraftfahrzeug, mit mindestens einem Wärmetauscher (4) und mindestens einem mindestens einen Luftstrom regelnden Modul (10), welches mindestens eine Klappe (9; 14) aufweist und hinter dem Wärmetauscher (4) angeordnet ist, wobei die Klappenanordnung (11) mindestens ein weiteres Modul (10) mit Klappen (8, 13) aufweist, das vor dem Wärmetauscher (4) angeordnet ist, wobei das in Luftströmungsrichtung vor dem Wärmetauscher (4) angeordnete Modul (10) mindestens zwei getrennt ausgebildete Klappen (8, 13) und/oder dass das in Luftströmungsrichtung hinter dem Wärmetauscher (4) angeordnete Modul (10) mindestens zwei getrennt ausgebildete Klappen (9, 14) aufweist, **dadurch gekennzeichnet, dass** die Schwenkachsen der mindestens zwei getrennt ausgebildeten Klappen (8 und 13; 9 und 14) nicht parallel zueinander angeordnet sind.

2. Klappenanordnung nach Anspruch 1, **dadurch gekennzeichnet, dass** die Module (10) zumindest im Wesentlichen als Gleichteile ausgebildet sind.

3. Klappenanordnung nach Anspruch 1 oder 2, **dadurch gekennzeichnet, dass** die Module (10) zumindest im Wesentlichen spiegelbildlich bezüglich der Mittellängsebene des Kraftfahrzeugs ausgebildet sind.

4. Klappenanordnung nach einem der vorhergehenden Ansprüche, **dadurch gekennzeichnet, dass** die Klappen (8 und 13, 9 und 14) miteinander koppelbar sind.

5. Klappenanordnung nach einem der vorhergehenden Ansprüche, **dadurch gekennzeichnet, dass** mindestens eines, insbesondere genau eines der Module (10) mindestens ein Dichtelement im Bereich der Klappen (8, 9, 13, 14) aufweist.

6. Klappenanordnung nach einem der vorhergehenden Ansprüche, **dadurch gekennzeichnet, dass** die Module (10) einer zweizonigen Klimaanlage sich von den Modulen (10) einer drei- oder vierzonigen Klimaanlage dadurch unterscheiden, dass bei den Modulen (10) der zweizonigen Klimaanlage Trennwände (12) durchgehend ausgebildet sind, die zumindest bereichsweise bei den Modulen (10) der drei- oder vierzonigen Klimaanlage durch Klappen (13, 14) ersetzt sind.

7. Klappenanordnung nach einem der vorhergehenden Ansprüche, **dadurch gekennzeichnet, dass** zwischen den Modulen (10) ein Zuheizer angeordnet ist.

8. Klappenanordnung nach einem der vorhergehenden Ansprüche, **dadurch gekennzeichnet, dass** Teil der Klappenanordnung (11) ein weiteres Modul mit mindestens einer Klappe (7, 15) ist, welches in einem Kaltluftkanal (5) eines Luftführungsgehäuse (2) anordenbar ist.

9. Klappenanordnung nach einem der vorhergehenden Ansprüche, **dadurch gekennzeichnet, dass** zumindest ein Teil der Klappen (7, 8, 9, 13, 14, 15) der Klappenanordnung (11) durch lamellenartige, um eine mittig verlaufende Schwenkachse drehbare Klappen gebildet ist.

10. Klappenanordnung nach einem der vorhergehenden Ansprüche, **dadurch gekennzeichnet, dass** die Module (10) einschließlich der Klappen (7, 8, 9, 13, 14, 15) als Kunststoff-Spritzgussteile ausgebildet sind.

11. Heizungs- oder Klimaanlage, insbesondere mehrzonige Kraftfahrzeug-Klimaanlage, mit einem Luftführungsgehäuse (2), in welchem mindestens ein Wärmetauscher (4) angeordnet ist, **gekennzeichnet durch** eine Klappenanordnung (11) nach einem der vorhergehenden Ansprüche.

12. Heizungs- oder Klimaanlage nach Anspruch 11, **dadurch gekennzeichnet, dass** die Module (10) der Klappenanordnung (11) im Luftführungsgehäuse (2) positioniert und von demselben gehalten und zumindest bereichsweise fixiert sind.

## Claims

1. A flap arrangement, in particular for a heating or air conditioning system (1) for a motor vehicle, comprising at least one heat exchanger (4) and at least one module (10) that regulates at least one air flow, has at least one flap (9; 14), and is disposed downstream of the heat exchanger (4), wherein the flap arrangment (11) includes at least one further module (10) that has flaps (8, 13) and is disposed upstream of the heat exchanger (4), wherein the module (10) disposed upstream of the heat exchanger (4) in the direction of air flow includes at least two separately formed flaps (8, 13), and/or wherein the module (10) disposed downstream of the heat exchanger (4) in the direction of air flow includes at least two separately formed flaps (9, 14), **characterized in that** the pivot axes of the at least two separately formed flaps (8 and 13; 9 and 14) are not disposed parallel to each other.

2. The flap arrangement according to claim 1, **characterized in that** the modules (10) are designed at least substantially as identical parts.

3. The flap arrangement according to claim 1 or 2, **characterized in that** the modules (10) are designed at least substantially as mirror images relative to the central longitudinal plane of the motor vehicle.

4. The flap arrangement according to one of the preceding claims, **characterized in that** the flaps (B and 13, 9 and 14) can be coupled to each other.

5. The flap arrangement according to one of the preceding claims, **characterized in that** at least one, in particular exactly one of the modules (10) includes at least one sealing element in the region of the flaps (8, 9, 13, 14).

6. The flap arrangement according to one of the preceding claims, **characterized in that** the modules (10) of a two-zone air conditioning system differ from the modules (10) of a three- or four-zone air conditioning system **in that** partition walls (12) in the modules (10) of the two-zone air conditioning system are continuous, and are replaced, at least in regions, by flaps (13, 14) in the modules (10) of the three- or four-zone air conditioning system.

7. The flap arrangement according to one of the preceding claims, **characterized in that** an additional heater is disposed between the modules (10).

8. The flap arrangement according to one of the preceding claims, **characterized in that** part of the flap arrangement (11) is a further module having at least one flap (7, 15) which can be disposed in a cold air duct (5) of an air guide housing (2).

9. The flap arrangement according to one of the preceding claims, **characterized in that** at least one part of the flaps (7, 8, 9, 13, 14, 15) of the flap arrangement (11) is formed by lamellar flaps that are rotatable about a pivot axis that extends through the center.

10. The flap arrangement according to one of the preceding claims, **characterized in that** the modules (10), including the flaps (7, 8, 9, 13, 14, 15), are formed as plastic injection-molded parts.

11. A heating or air conditioning system, in particular a mult-zone air conditioning system, comprising an air guide housing (2) in which at least one heat exchanger (4) is disposed, **characterized by** a flap arrangmement (11) according to one of the preceding claims.

12. The heating or air conditioning system according to claim 11, **characterized in that** the modules (10) of the flap arrangement (11) are positionined in the air guide housing (2), are held by the air guide housing (2), and are secured at least in regions.

## Revendications

1. Agencement de volets, en particulier pour un système de chauffage ou de climatisation (1) pour un véhicule automobile, comprenant au moins un échangeur de chaleur (4) et au moins un module (10) régulant au moins un flux d'air, module qui présente au moins un volet (9 ; 14) et est disposé derrière l'échangeur de chaleur (4), où l'agencement de volets (11) présente au moins un autre module (10) comportant des volets (8, 13), module qui est disposé devant l'échangeur de chaleur (4), où le module (10) disposé devant l'échangeur de chaleur (4), dans la direction d'écoulement de l'air, présente au moins deux volets (8, 13) configurés séparément et / ou le module (10) disposé derrière l'échangeur de chaleur (4), dans la direction d'écoulement de l'air, présente au moins deux volets (9, 14) configurés séparément,
**caractérisé en ce que** les axes de pivotement des volets (8 et 13 ; 9 et 14) au moins au nombre de deux, configurés séparément, sont disposés en n'étant pas parallèles l'un par rapport à l'autre.

2. Agencement de volets selon la revendication 1, **caractérisé en ce que** les modules (10) sont configurés au moins sensiblement comme des pièces identiques.

3. Agencement de volets selon la revendication 1 ou 2, **caractérisé en ce que** les modules (10) sont configurés au moins sensiblement de façon symétrique par rapport au palan longitudinal médian du véhicule automobile.

4. Agencement de volets selon l'une quelconque des revendications précédentes, **caractérisé en ce que** les volets (8 et 13, 9 et 14) peuvent être couplés entre eux.

5. Agencement de volets selon l'une quelconque des revendications précédentes, **caractérisé en ce qu'**au moins l'un des composants, en particulier précisément l'un des modules (10), présente au moins un élément d'étanchéité dans la zone des volets (8, 9, 13, 14).

6. Agencement de volets selon l'une quelconque des revendications précédentes, **caractérisé en ce que** les modules (10) d'un système de climatisation à deux zones se distinguent des modales (10) d'un système de climatisation à trois ou quatre zones, par le fait que des parois de séparation (12) sont configurés de façon continue dans le cas des modules (10) du système de climatisation à deux zones, parois de séparation qui, dans le cas des modules (10) du système de climatisation à trois ou quatre zones, sont remplacées au moins partiellement par des volets (13, 14).

7. Agencement de volets selon l'une quelconque des revendications précédentes, **caractérisé en ce qu'**un dispositif de chauffage auxiliaire est disposé entre les modules (10).

8. Agencement de volets selon l'une quelconque des revendications précédentes, **caractérisé en ce qu'**une partie de l'agencement de volets (11) est un autre module comportant au moins un volet (7, 15), module qui peut être disposé dans un conduit d'air froid (5) d'un carter de guidage d'air (2).

9. Agencement de volets selon l'une quelconque des revendications précédentes, **caractérisé en ce qu'**au moins une partie des volets (7, 8, 9, 13, 14, 15) de l'agencement de volets (11) est formée par des volets, du type à lamelles, qui pivotent autour d'un axe de pivotement s'étendant de façon centrale.

10. Agencement de volets selon l'une quelconque des revendications précédentes, **caractérisé en ce que** les modules (10), y compris les volets (7, 8, 9, 13, 14, 15), sont configurés comme des pièces en matière plastique moulées par injection.

11. Système de chauffage ou de climatisation d'un véhicule automobile, en particulier système de climatisation à zones multiples comprenant un carter de guidage d'air (2) dans lequel est disposé au moins un échangeur de chaleur (4), **caractérisé par** un agencement de volets (11) selon l'une quelconque des revendications précédentes.

12. Système de chauffage ou de climatisation selon la revendication 11, **caractérisé en ce que** les modules (10) de l'agencement de volets (11) sont positionnés dans le carter de guidage d'air (2) et maintenus et au moins partiellement fixés par ce même carter de guidage d'air.
